# EUROPÄISCHE PATENTSCHRIFT

(11) **EP 0 670 469 B1**
(45) Veröffentlichungstag und Bekanntmachung des Hinweises auf die Patenterteilung: **29.04.1998**
(21) Anmeldenummer: 95102322.5
(22) Anmeldetag: 20.02.1995
(51) Int. Cl.: G01C 19/66, G01C 19/72

(54) **Brillouin-Ringlaserkreisel**
Brillouin-ring laser gyro
Gyroscope à laser en anneau du type brillouin

(30) Priorität: 05.03.1994 DE 4407348
(43) Veröffentlichungstag der Anmeldung: 06.09.1995
(73) Patentinhaber: Raab, Michael, 88682 Salem (DE)
(72) Erfinder: Raab, Michael, 88682 Salem (DE)
(74) Vertreter: Weisse, Jürgen, Dipl.-Phys. Patentanwalt

(56) Entgegenhaltungen:
- EP-A- 0 104 942
- DE-A- 4 218 905

## Beschreibung

Die Erfindung betrifft einen Brillouin-Ringlaserkreisel, enthaltend einen Faser-Ringresonator, der eine Folge von Resonanzfrequenzen aufweist, wobei sich benachbarte Resonanzfrequenzen um einen freien Spektralbereich unterscheiden, und Mittel zur Erzeugung von zwei gegenläufigen Pumplaserwellen, deren Frequenzunterschied ein Vielfaches des freien Spektralbereichs des Faser-Ringresonators beträgt und deren Frequenzen mit Resonanzfrequenzen des Ringresonators zusammenfallen, wobei durch stimulierte Brillouin-Streuung in dem Faser-Ringresonator zwei gegenläufige Brillouin-Ringlaser angeregt werden.

Ein Ringlaserkreisel nutzt den Sagnac-Effekt aus, um Drehraten gegenüber dem inertialen Raum zu messen. In einem Ringresonator werden rechtsherum und linksherum laufende Laserwellen erzeugt. Die Frequenz der entstehenden Laserwellen hängt von der Resonanzfrequenz und damit von der optischen Weglänge eines Umlaufs des Ringresonators ab. Wenn ein solcher Ringresonator gegenüber dem inertialen Raum um eine zu seiner Ebene senkrechte Achse gedreht wird, dann wird nach dem Sagnac-Effekt die optische Weglänge für die rechtsherum und die linksherum laufenden Wellen unterschiedlich. Dementsprechend ändern sich auch die Frequenzen des "Rechtsherum"-Ringlasers und des "Linksherum"-Ringlasers relativ zueinander. Wenn die rechtsherum und die linksherum laufenden Laserwellen überlagert werden, tritt eine Schwebungsfrequenz auf, die der Drehrate proportional ist. Typische Ringlaserkreisel sind He-Ne-Gaslaser mit einem Helium-Neon-Gasgemisch als Lasermedium und mit einem von Spiegeln bestimmten dreieckigen Ringresonator. Solche Ringlaserkreisel zeigen im Bereich kleiner Drehraten ein "Lock-in". Durch Rückstreuung von Licht des "Rechtsherum"-Ringlasers in den "Linksherum"-Ringlaser und umgekehrt schwingen beide Laser auf eine gemeinsame Frequenz ein. Es tritt keine der Drehrate proportionale Schwebungsfrequenz auf (Frederick Aronowitz "The Laser Gyro").

Es sind Brillouin-Ringlaserkreisel bekannt. Bei solchen Ringlaserkreiseln ist der Ringresonator von einem Faserring gebildet. In diesen Faser-Ringresonator wird Licht von einem Pumplaser mit hoher Energie einmal rechtsherum und einmal linksherum eingekoppelt. Durch diese Pumplaserwellen werden akustische Wellen in dem Faser-Ringresonator stimuliert. Diese akustischen Wellen rufen eine entsprechend einmal linksherum und einmal rechtsherum laufende, stimulierte Brillouin-Streuung hervor. Es werden so zwei Brillouin-Laser erhalten mit einmal rechtsherum und einmal linksherum in dem Faser-Ringresonator umlaufenden Laserwellen. Die Frequenzen der stimulierten Brillouin-Strahlung in diesen Brillouin-Lasern sind niedriger als die Frequenzen der Pumplaserwellen. Sie stellen sich auch auf eine Resonanzfrequenz des Faser-Ringresonators ein. Bei einer Drehrate werden diese Resonanzfrequenzen verschoben, so daß auch hier eine der Drehrate proportionale Schwebungsfrequenz entsteht ("Applied Optics" Bd. 19 (1980), 1906-1908; "Optics Letters" Bd.16 (1991), 229-231).

Auch dabei tritt die im Zusammenhang mit Ringlaserkreiseln oben schon erwähnte Unempfindlichkeit durch "Lock-in" im Bereich kleiner Drehraten auf.

Es ist aus diesem Grund bekannt, das "Lock-in" dadurch zu vermeiden, daß die beiden Brillouin-Ringlaser des Brillouin-Ringlaserkreisels in zwei unterschiedlichen Moden, d.h. bei zwei unterschiedlichen Resonanzfrequenzen des Fiber-Ringresonators arbeiten ("Optics Letter" Bd.16 (1991, 230).

Es ist auch bekannt, den "Rechtsherum"-Ringlaser und den "Linksherum"-Ringlaser eines Brillouin-Ringlaserkreisels durch je einen eigenen Pumplaser anzuregen ("Optics Letter" Bd.16 (1991), 393-395). Es ist aus dieser Druckschrift auch eine Anordnung bekannt, bei welcher Pumplaser-Zuleitungen für die beiden Pumplaser von zwei Enden einer einzigen Faser gebildet sind. Die Faser erstreckt sich von einem Pumplaser zum anderen. Im Mittelbereich der Faser ist die Faser über einen Koppler mit dem Faser-Ringresonator gekoppelt. Zur Überlagerung der Laser-Lichtbündel der gegenläufigen Brillouin-Ringlaser ist ein von den Pumplaser-Zuleitungen über Verzweiger abgezweigtes, gesondertes Wellenleiternetzwerk mit einem Überlagerungs-Richtkoppler vorgesehen.

Durch die Verwendung von zwei Brillouin-Ringlasern mit stark unterschiedlichen Frequenzen (Zweifarben-Ringlaserkreisel) wird die Beeinflussung eines der Brillouin-Ringlaser durch den anderen und damit ein "Lock-in" vermieden. Es treten jedoch auch bei Zweifarben-Ringlaserkreiseln Frequenzschwankungen der Brillouin-Ringlaser auf, welche die Meßgenauigkeit verschlechtern und der Messung kleiner Drehraten, z.B. der Erddrehung, entgegenstehen.

EP 0 393 987 A2 zeigt einen Ringlaserkreisel mit einem einzigen Detektor, an welchem die im Uhrzeigersinn und entgegen dem Uhrzeigersinn umlaufenden Strahlen interferieren, nachdem sie den Ring verlassen haben. Eine Drehrate des Ringlaserkreisels ruft eine Phasenverschiebung der im Uhrzeigersinn und entgegen dem Uhrzeigersinn verlaufenden Strahlen und dadurch ein entsprechendes Interferenzsignal an dem Detektor hervor. Das Ausgangssignal des Detektors wird einem ersten und einem zweiten Regelkreis zugeführt, um Änderungen in den optischen Weglängen bzw. Drehungen des Kreisels zu kompensieren. Beide Strahlen haben die gleiche Frequenz. Es tritt keine Schwebungsfrequenz auf. Ein optischer Isolator vor dem Laser schutzt den Laser vor Beeinflußung von ausgekoppelten Resonatorstrahlen. Hierbei handelt es sich nicht um einen Brillouin-Ringlaser.

Die EP 0 240 949 A2 beschreibt einen passiven Ringresonator zur Messung von Drehraten. Zwei Laserstrahlen werden in den passiven Ringresonator im Uhrzeigersinn und entgegen dem Uhrzeigersinn hineingeführt. Komplexe Steuerkreise sind vorhanden, um Änderungen der optischen Weglängen zu kompensieren, wenn eine Drehrate vorliegt. Diese Steuerkreise liefern ein Maß für die Drehrate. Auch hierbei handelt es sich nicht um einen Brillouin-Ringlaser.

Die EP 0 516 332 A2 zeigt einen elektrisch abstimmbaren Faser-Ringlaser. Der Ringlaser enthält einen Resonanzhohlraum in Form eines Faserrings. Dieser Resonanzhohlraum enthält ein Lasermedium in Form eines Erbium-dotierten Faserverstärkers, welcher eine optische Verstärkung in den Faserring hervorruft. Der Erbiumdotierte Faserverstärker wird durch eine Faser und einen Koppler von einem Pumplaser in Form einer Laserdiode gepumpt. Die Frequenz dieses Lasers kann durch einen Faser-Fabry-Perot abgestimmt werden. Es handelt sich hierbei im Prinzip um einen klassischen Ringlaserkreisel.

DE-OS 27 20 256 beschreibt ein Verfahren zur Messung einer Inertialdrehung. Durch zwei Laser werden zwei monochromatische Strahlen erzeugt, welche in einem passiven Ring in entgegengesetzter Richtung in Resonanz umlaufen. Die durch die Drehung des Ringes hervorgerufene Frequenzverschiebung jedes der beiden Strahlen werden bestimmt.

DE-OS 42 18 905 beschreibt einen Brillouin-Ringlaser mit einem Faser-Ringresonator. Ein Pumplaser erzeugt gegensinnig umlaufenden Schallwellen in dem Faser-Ringresonator. Die durch Brillouin-Streuung erzeugten, gegensinnig in dem Faser-Ringresonator umlaufenden Brillouin-Lichtwellen werden durch einen Sechstorkoppler an zwei Detektoren überlagert, wobei eine Interferenz auftritt. Eine richtungserkennende Schaltung erzeugt Richtungssignale aus den beiden Detektorsignalen.

EP 0 104 942 A2 zeigt einen Brillouin-Ringlaser mit einem aus einer Schleife aus faseroptischem Material gebildeten Faser-Resonator und einem faseroptischen Richtungskoppler zum optischen Schließen der Schleife. Ein aus einem Polarisator und einem Viertelwellen-Platte bestehender, optischer Isolator ist vor dem Laser angeordnet. Dieser optische Isolator verhindert das Eintreten von reflektiertem Licht in den Laser. Durch Brillouin-Streuung entstehen im Uhrzeigersinn umlaufenden und entgegen dem Uhrzeigersinn umlaufenden Laserwellen in dem Faser-Ringresonator. Die Frequenzen der Laserstrahlen sind von den optischen Weglängen des Faser-Ringresonators abhängig. Wenn der Faser-Ringresonator einer Drehrate ausgesetzt wird, entsteht eine Schwebungsfrequenz zweier Laserfrequenzen. Diese Schwebungsfrequenz wird von einem Detektor erfaßt und liefert ein Maß für die Drehrate.

Der Erfindung liegt die Aufgabe zugrunde, die Auflösung eines einen Brillouin-Ringlaserkreisel der eingangs genannten Art zu verbessern.

Erfindungsgemäß wird diese Aufgabe gelöst durch Mittel zur Dämpfung von in den Faser-Ringresonator rückgekoppelter, resonatorexterner Rückkoppelanteile.

Die Erfindung beruht auf der Erkenntnis, daß die auftretenden Frequenzschwankungen der Brillouin-Ringlaser bei einem Brillouin-Ringlaserkreisel der vorliegenden Art dadurch hervorgerufen werden, daß von dem aus dem Brillouin-Ringlaser ausgekoppelten Licht ein Teil wieder auf den Faser-Ringresonator zurückgeworfen und in den Faser-Ringresonator eingekoppelt wird. Wenn diese "resonatorexternen Rückkoppelanteile" durch gezielte Maßnahmen gedämpft werden, so werden dadurch die Frequenzschwankungen vermindert. Die Auflösung des Brillouin-Ringlaserkreisels wird dadurch wesentlich verbessert.

Die Dämpfung der resonatorexternen Rückkoppelanteile kann auf verschiedene Weise geschehen. Verschiedene Möglichkeiten hierzu und Ausgestaltungen der Erfindung sind Gegenstand der Unteransprüche.

Ausführungsbeispiele der Erfindung sind nachstehend unter Bezugnahme auf die zugehörigen Zeichnungen näher erläutert.
- Fig.1: zeigt schematisch einen Brillouin-Ringlaserkreisel, bei welchem zur Dämpfung der resonatorexternen Rückkoppelanteile optische Isolatoren in den Pumplaser-Zuleitungen und ein Phasenmodulator für eine trägerunterdrückte Seitenband-Modulation in einer Zuleitung des Überlagerungs-Richtkopplers vorgesehen sind.
- Fig.2: zeigt schematisch einen Brillouin-Ringlaserkreisel, bei welchem zur Dämpfung der resonatorexternen Rückkoppelanteile optische Isolatoren in den Pumplaser-Zuleitungen und weitere optische Isolatoren in den Zuleitungen des Überlagerungs-Richtkopplers vorgesehen sind.
- Fig.3: zeigt schematisch eine Versuchsanordnung zur Bestimmung der Erddrehrate unter Verwendung eines als Zweifarben-Ringlaserkreisel ausgebildeten Brillouin-Ringlaserkreisels.
- Fig.4: zeigt das mit der Versuchsanordnung von Fig.3 erhaltene Fourier-Spektrum bei Stellung "Nord" des Brillouin-Ringlaserkreisels.
- Fig.5: zeigt das mit der Versuchsanordnung von Fig.3 erhaltene Fourier-Spektrum bei Stellung "Süd" des Brillouin-Ringlaserkreisels.
- Fig.6: zeigt eine frequenzanaloge Darstellung des Signals des Brillouin-Ringlaserkreisels in der Versuchsanordnung von Fig.3 bei der Positionsfolge Süd => West => Nord => Ost => Nord.

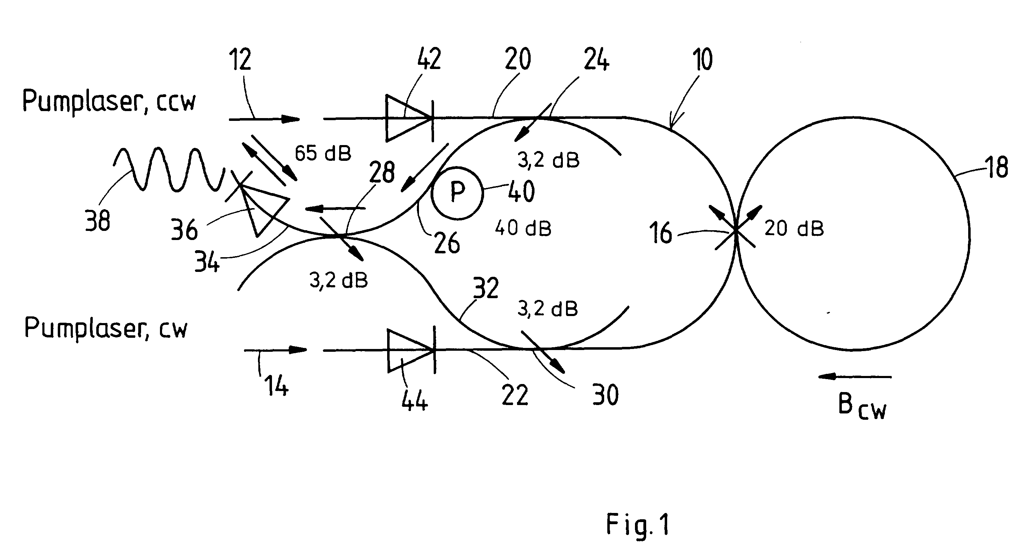

In Fig.1 ist mit 10 eine Faser bezeichnet, die von einem ersten Pumplaser 12 zu einem zweiten Pumplaser 14 (jeweils dargestellt durch einen Pfeil) verläuft. Im Mittelbereich ist die Faser 10 durch einen Koppler 16 mit einem Faser-Ringresonator 18 gekoppelt. Zwischen dem ersten Pumplaser 12 und dem Koppler 16 bildet die Faser 10 eine erste Pumplaser-Zuleitung 20. Zwischen dem zweiten Pumplaser 14 und dem Koppler 16 bildet die Faser 10 eine zweite Pumplaser-Zuleitung 22. Die Pumplaser 12 und 14 erzeugen Pumplaserwellen. Die Pumplaserwelle des Pumplasers 12 wird über den Koppler 16 linksherum, d.h. entgegen dem Uhrzeigersinn, eingekoppelt. Die Pumplaserwelle des Pumplasers 14 wird über den Koppler 16 rechtsherum, d.h. im Uhrzeigersinn, eingekoppelt. Der Faser-Ringresonator 18 besitzt eine Folge von Resonanzfrequenzen. Benachbarte Resonanzfrequenzen sind jeweils durch den freien Spektralbereich voneinander getrennt. Die beiden Pumplaser 12 und 14 emittieren Pumplaserwellen von unterschiedlicher Frequenz. Die Frequenzen der beiden Pumplaserwellen sind durch bekannte und daher nicht gesondert dargestellte Regelmittel so geregelt, daß sie mit verschiedenen Resonanzfrequenzen des Faser-Ringresonators 18 zusammenfallen. Dabei beträgt der Unterschied der Frequenzen ein Vielfaches des freien Spektralbereiches des Faser-Ringresonators 18.

Die Pumplaserwellen stimulieren akustische Wellen in dem Faser-Ringresonator 18. Die rechtsherum laufende Pumplaserwelle vom Pumplaser 14 führt zu einer entsprechend rechtsherum laufenden akustischen Welle. Die linksherum laufende Pumplaserwelle vom Pumplaser 12 führt zu einer entsprechend linksherum laufenden akustischen Welle. Diese akustischen Wellen führen wiederum zu stimulierter Brillouin-Streuung. Die stimulierte Brillouin-Streuung regt zwei gegenläufige Ringlaser an: Die rechtsherum laufende akustische Welle führt zu linksherum laufender Brillouin-Streustrahlung und einem entsprechend linksherum laufenden Ringlaser. Die linksherum laufende akustische Welle führt zu rechtsherum laufender Brillouin-Streustrahlung und einem entsprechend rechtsherum laufenden Ringlaser. Die Frequenz der Brillouin-Streustrahlung ist gegen die Frequenz der Pumplaserwelle zum langwelligen, also zu niedrigeren Frequenzen hin verschoben. Die Brillouin-Streustrahlung bildet dabei ein relativ breites Frequenzspektrum verglichen mit den Resonanzspitzen des Faser-Ringresonators. In diesem Frequenzspektrum liegt wieder eine Resonanzfrequenz des Faser-Ringresonators 18. Auf diese Resonanzfrequenz stellt sich die Frequenz des Ringlasers ein. Die Frequenzen der beiden Ringlaser sind stark unterschiedlich. Dadurch wird eine gegenseitige Beeinflussung der Ringlaser ausgeschlossen.

Durch den Koppler 16 werden Teile der Laserwellen aus den beiden Ringlasern ausgekoppelt. Ein Teil der rechtsherum laufenden Laserwellen wird in die Pumplaser-Zuleitung 20 eingekoppelt und läuft in dieser von rechts nach links in Fig.1. Ein Teil der linksherum laufenden Laserwellen wird in die Pumplaser-Zuleitung 22 eingekoppelt und läuft in dieser ebenfalls von rechts nach links in Fig.1. Von der in der Pumplaser-Zuleitung 20 von rechts nach links laufenden Laserwelle des rechtsherum laufenden Ringlasers wird wiederum ein Teil durch einen Koppler 24 ausgekoppelt und auf eine Zuleitung 26 zu einem Überlagerungs-Richtkoppler 28 geleitet. In entsprechender Weise wird von der in der Pumplaser-Zuleitung 22 von rechts nach links laufenden Laserwelle des rechtsherum laufenden Ringlasers wiederum ein Teil durch einen Koppler 30 ausgekoppelt und über eine Zuleitung 32 ebenfalls zu dem Überlagerungs-Richtkoppler 28 geleitet.

Das Ende 34 der die Zuleitung 26 bildenden Faser hinter dem Überlagerungs-Richtkoppler 28 ist zu einer Photodiode oder einem sonstigen photoelektrischen Detektor 36 geführt. Der Detektor 36 liefert eine Schwebungsfrequenz der beiden Laserfrequenzen. Das ist durch den Wellenzug 38 angedeutet.

Wenn der Brillouin-Ringlaserkreisel einer Drehrate um eine zur Ebene des Faser-Ringresonators 18 senkrechte Achse unterworfen wird, verändern sich die optischen Weglängen des Faser-Ringresonators 18 für die rechtsherum und die linksherum laufende Strahlung gegensinnig. Dementsprechend verändern sich auch die Resonanzfrequenzen und die Frequenzen der beiden Ringlaser. Dies führt zu einer entsprechenden Änderung der Schwebungsfrequenz am Detektor 36. Diese Änderung der Schwebungsfrequenz liefert ein Maß für die Drehrate.

Bei solchen Brillouin-Ringlaserkreiseln treten trotz der Entkopplung der beiden Ringlaser Frequenzschwankungen auf. Diese sind zurückzuführen auf "resonatorexterne Rückkoppelanteile", d.h. auf Störlicht aus dem rechtsherum oder dem linksherum laufenden Laser, das außerhalb des Faser-Ringresonators 18 gestreut, in den Faser-Ringresonator 18 zurückgeworfen wird und durch Rückkopplung den betreffenden Laser beeinflußt. Zur Dämpfung solcher resonatorexterner Rückkoppelanteile sind bei der Ausführung von Fig.1 verschiedene Maßnahmen getroffen:

In die Zuleitung 26 zu dem Überlagerungs-Richtkoppler 28 ist ein Phasenmodulator 40 eingeschaltet. In der anderen Zuleitung 32, die von dem Koppler 30 zu dem Überlagerungs-Richtkoppler 28 führt, ist ein solcher Phasenmodulator nicht vorgesehen. Der Phasenmodulator 40 bewirkt eine Phasenmodulation mit unterdrücktem Träger und hoher Rückflußdämpfung in Richtung des Faser-Ringresonators 18.

Der Phasenmodulator 40 enthält einen Abschnitt der Faser der Zuleitung 26, der auf den Mantel eines piezokeramischen Ringes gewickelt ist. Der piezokeramische Ring wird sinusförmig elektrisch angesteuert und dehnt sich entsprechend aus. Diese Ausdehnung der Faser bewirkt eine periodische Änderung der optischen Weglänge und dadurch eine Phasenmodulation. Die Frequenz und der Hub der Weglängen-Änderung sind so gewählt, daß der Modulationsindex gerade 2,305 beträgt. Das ist die erste Nullstelle der Besselfunktion nullter Ordnung. Die aus dem rechtsherum laufenden Ringlaser durch den Koppler 16 in die Pumplaser-Zuleitung 20 ausgekoppelte und weiter von dem Koppler 24 aus der Pumplaser-Zuleitung 20 in die Zuleitung 26 ausgekoppelte Laserwelle wird dann trägerunterdrückt seitenbandmoduliert: Hinter dem Phasenmodulator 40 treten nur die durch die Phasenmodulation erhaltenen Seitenbänder auf, nicht mehr die Frequenz der Laserwelle selbst. Wenn dieses Licht z.B. an dem Übergang zum Detektor 36 rückgestreut wird, dann kann dieses rückgestreute Licht, auch wenn es über die Zuleitung 32 und die Koppler 30 und 16 teilweise wieder rechtsherum in den Faser-Ringresonator 18 gelangt, die Frequenz des rechtsherum laufenden Lasers nicht beeinflussen. Das gilt jedenfalls, wenn die Modulationsfrequenz hinreichend groß gewählt ist. Typischerweise reichen dafür Modulationsfrequenzen von einigen Kilohertz. Das gleiche gilt für die Laserwelle, die durch den Koppler 16 aus dem linksherum laufenden Laser in die Pumplaser-Zuleitung 22 ausgekoppelt und von dem Koppler 30 auf die Zuleitung 32 geleitet wird. Reflektierte oder rückgestreute Rückkoppelanteile von diesem Licht müßten über die Zuleitung 26, Koppler 24, Pumplaser-Zuleitung 20 und Koppler 16 in den Faser-Ringresonator 18 zurückgeleitet werden, wenn sie linksherum oder gegen den Uhrzeigersinn in Fig.1 in den Faser-Ringresonator 18 eintreten sollen. Dann müssen aber die Rückkoppelanteile ebenfalls den Phasenmodulator 40 durchlaufen. Auch diese Rückkoppelanteile werden damit auf Seitenbänder gedrängt, welche den linksherum laufenden Laser nicht beeinflussen. Durch diese Maßnahme wird je nach Qualität des Phasenmodulators 40 die Entkoppelung des Überlagerungs-Richtkopplers und des Detektors von dem Laser um drei bis sechs Größenordnungen verbessert.

Eine weitere Maßnahme zur Dämpfung der resonatorexternen Rückkoppelanteile bei dem Brillouin-Ringlaserkreisel von Fig.1 besteht darin, daß in den Pumplaser-Zuleitungen zwischen den Pumplasern 12 und 14 und den Kopplern 24 bzw. 30 optische Isolatoren oder "optische Dioden" 42 bzw. 44 angeordnet sind. Die optischen Isolatoren 42 und 44 haben eine hohe Rückfluß-Dämpfung von z.B. 65 dB. Stattdessen oder zusätzlich können Maßnahmen getroffen sein, um die Fasereinkopplung von den Pumplasern 12 und 14 in die Pumplaser-Zuleitungen 20 bzw. 22 zu verbessern und damit Reflexionen der Laserwellen an diesen Fasereinkopplungen zu minimieren.

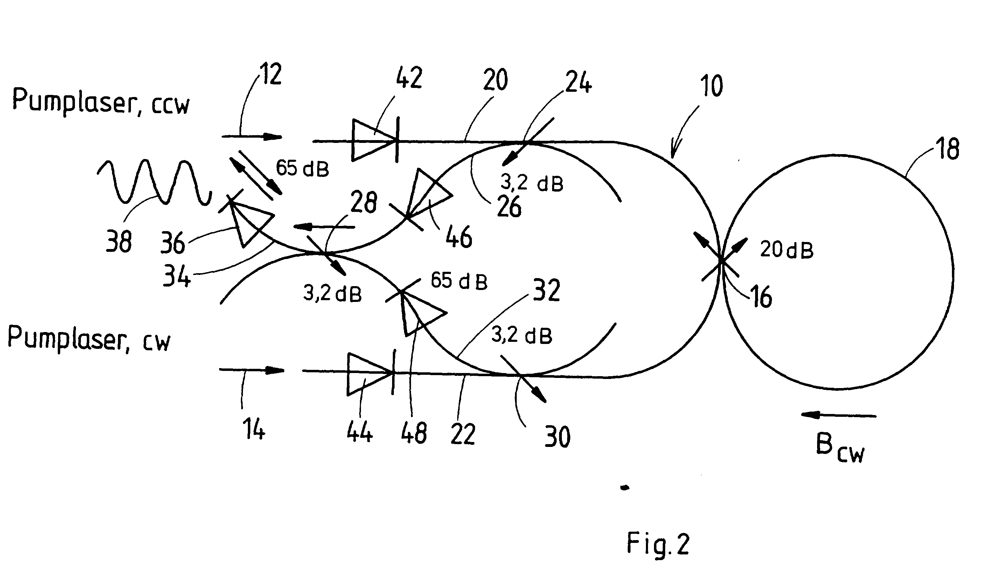

Der Grundaufbau des Brillouin-Ringlaserkreisels von Fig.2 ist ähnlich wie der des Brillouin-Ringlaserkreisels von Fig.1. Entsprechende Teile tragen in beiden Figuren die gleichen Bezugszeichen.

Bei der Ausführung von Fig.2 ist der Phasenmodulator 40 nicht vorhanden. Stattdessen sind in den beiden Zuleitungen 26 und 32 zu dem Überlagerungs-Richtkoppler 28 optische Isolatoren 46 bzw. 48 vorgesehen. Die optischen Isolatoren 46 und 48 gestatten den Durchtritt des Lichts zu dem Überlagerungs-Richtkoppler 28 hin, haben aber eine hohe Rückflußdämpfung von z.B. 65 dB.

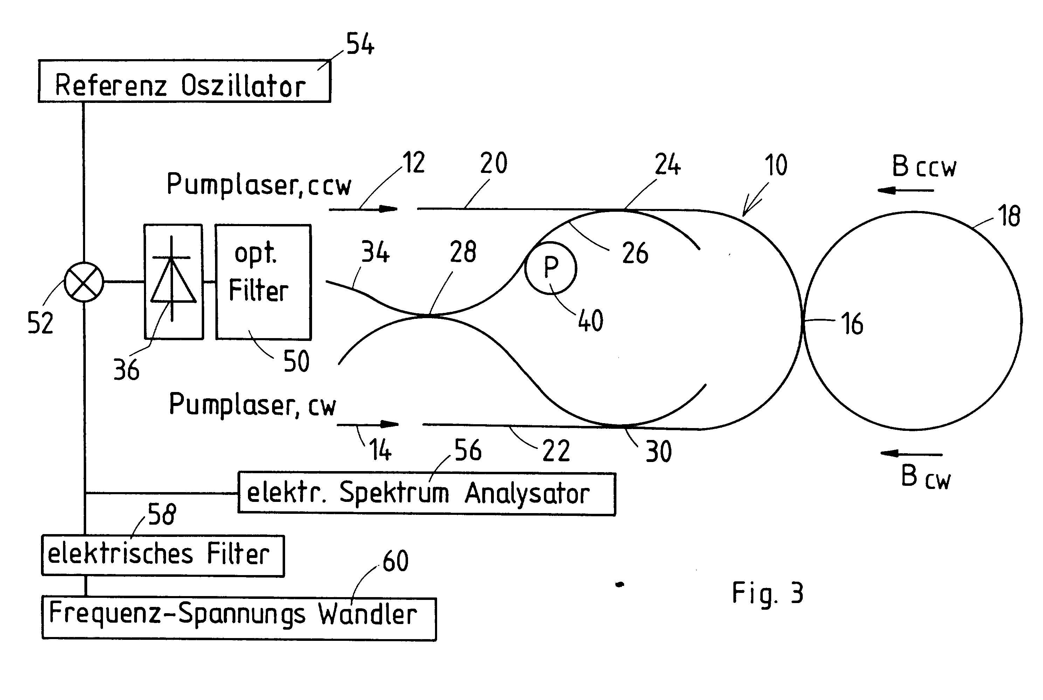

Fig.3 zeigt schematisch einen experimentellen Aufbau, durch welche die Wirkung einer Dämpfung der resonatorexternen Rückkoppeleffekte demonstriert werden kann.

Der Aufbau des Brillouin-Ringlaserkreisels entspricht im wesentlichen dem von Fig.1. Entsprechende Teile sind in Fig.3 mit den gleichen Bezugszeichen versehen wie in Fig.1. Im Vergleich zu dem Brillouin-Ringlaserkreisel von Fig.1 sind bei dem Brillouin-Ringlaserkreisel von Fig.3 die optischen Isolatoren 42 und 44 nicht vorhanden.

Zwischen das Ende 34 der Zuleitung 26 und den Detektor 36 ist ein optisches Filter 50 eingeschaltet. In einem Mischer 52 wird die erhaltene Schwebungsfrequenz mit der Frequenz eines Referenz-Oszillators 54 gemischt. Die Frequenz des Referenz-Oszillators 54 liegt bei 47 MHz in der Nähe des freien Spektralbereichs. Damit liegt die Ausgangsfrequenz des Mischers 52 im Kilohertz-Bereich. Das Ausgangssignal des Mischers 52 ist einmal auf einen elektrischen Spektrum-Analysator 56 geschaltet. Zum anderen wird das Ausgangssignal des Mischers 52 durch ein elektrisches Filter 58 gefiltert und durch einen Frequenz-Spannungs-Wandler 60 in eine entsprechende Spannung umgesetzt.

Wenn zunächst ohne die trägerunterdrückte Seitenband-Modulation durch den Phasenmodulator 40 gearbeitet wird, dann ergeben sich Frequenzschwankungen des mit der Frequenz des Referenz-Oszillators gemischten Schwebungssignals in der Größenordnung von 100 Hertz. Nach Einschalten und Optimieren des Phasenmodulators 40 wird das dann entstehende Seitenband-Spektrum stabil. Die kurzzeitigen Schwankungen der Frequenz betragen weniger als ein Hertz.

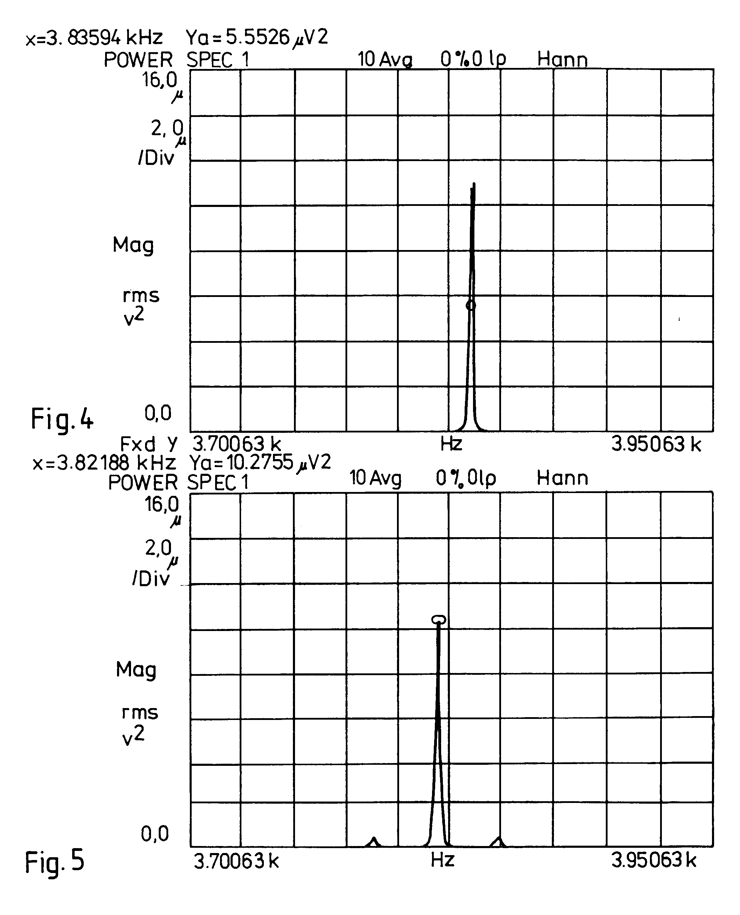

Fig.4 und 5 zeigen das Fourier-Spektrum des Ausgangs-Signals des Mischers 52, wie es von dem elektrischen Spektren-Analysator 56 geliefert wird, einmal bei Aurichtung der Eingangsachse des Brillouin-Ringlaserkreisels nach Nord (Fig.4) und einmal bei Ausrichtung dieser Eingangsachse nach Süd (Fig.5). Am Meßort (Überlingen) beträgt die Horizontalkomponente der Erdrotation recht genau 10°/h. Dem entspricht mit einem Skalenfaktor D/n∗lambda mit D = 27 cm, n=1,45 und lambda = 1,32 µm eine Schwebungsfrequenz von 6,8 Hertz, wobei D der Durchmesser des Ringresonators, n der Brechungsindex der Faser und lambda die Wellenlänge der Laserwelle ist. Die sich aus Fig.4 und 5 ergebende Frequenzdifferenz von 14 Hertz entspricht erwartungsgemäß etwa dem doppelten Wert der Horizontalkomponente der Erdrotation.

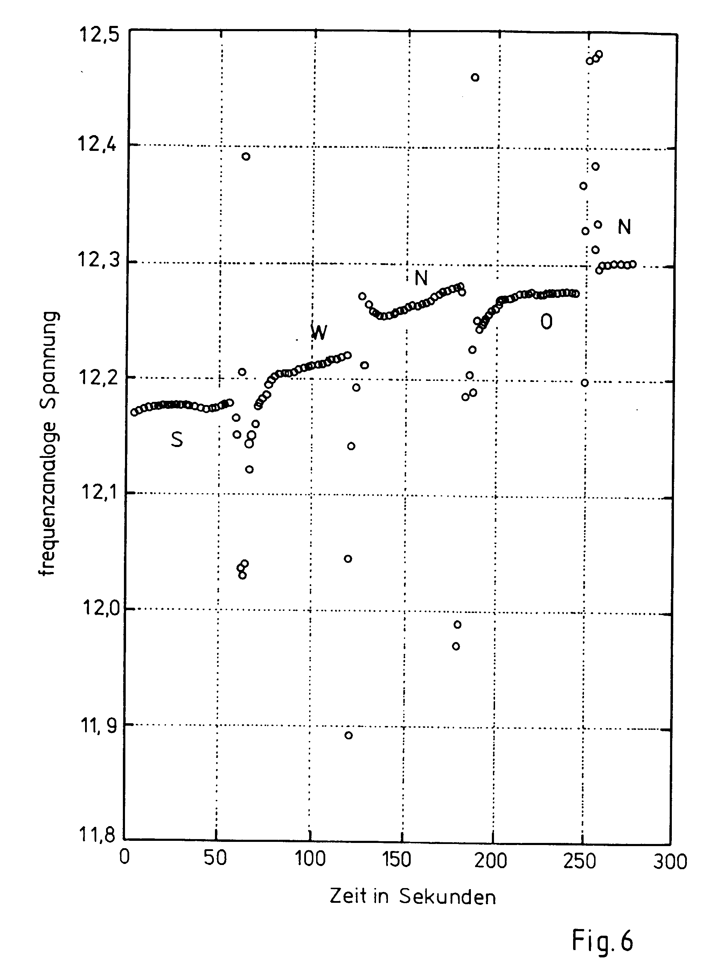

Gemäß Fig.6 wird Brillouin-Ringlaserkreisel von Fig.3 nacheinander mit seiner Eingangsachse, die senkrecht zur Ebene des Faser-Ringresonators 18 verläuft, in die Süd-, die West-, die Nord-, die Ost- und wieder die Nord-Position gebracht. In Fig.6 sind in Abhängigkeit von der Zeit die von dem Frequenz-Spannungs-Wandler 60 gelieferten frequenzabhängigen Spannungen dargestellt. Abgesehen von Übergangszuständen ergeben sich im wesentlichen gerade, gegeneinander in Ordinatenrichtung versetzte Signalverläufe. Der Versatz der bei Ausrichtung nach Nord und Süd erhaltenen Signalverläufe gegen die Signalverläufe, die bei Ausrichtung nach Ost und West erhalten werden, entspricht etwa dem theoretischen Wert. Den Signalverläufen ist eine Drift unterlagert, die sich u.a. durch Temperaturänderungen ergibt. Der Brechungsindex und die geometrische Länge des Faser-Ringresonators 18 hängen von der Temperatur ab.

## Patentansprüche

1. Brillouin-Ringlaserkreisel, enthaltend
(a) einen Faser-Ringresonator (18), der eine Folge von Resonanzfrequenzen aufweist, wobei sich benachbarte Resonanzfrequenzen um einen freien Spektralbereich unterscheiden, und
(b) Mittel zur Erzeugung von zwei gegenläufigen Pumplaserwellen, deren Frequenzunterschied ein Vielfaches des freien Spektralbereichs des Faser-Ringresonators (18) beträgt und deren Frequenzen mit Resonanzfrequenzen des Faser-Ringresonators (18) zusammenfallen, wobei durch stimulierte Brillouin-Streuung in dem Faser-Ringresonator (18) zwei gegenläufige Brillouin-Ringlaser angeregt werden,
gekennzeichnet durch
(c) Mittel (40;42,44;46,48) zur Dämpfung von in den Faser-Ringresonator (18) rückgekoppelter, resonatorexterner Rückkoppelanteile.

2. Brillouin-Ringlaserkreisel nach Anspruch 1, **dadurch gekennzeichnet, daß**
- die Mittel zur Erzeugung von zwei gegenläufigen Pumplaserwellen von zwei Pumplasern (12,14) gebildet sind, deren Pumplaserwellen über Pumplaser-Zuleitungen (20,22) und Kopplermittel (16) in den Faser-Ringresonator (18) einkoppelbar sind, und
- zur Überlagerung der Laser-Lichtbündel der gegenläufigen Brillouin-Ringlaser ein von den Pumplaser-Zuleitungen (20,22) über Verzweiger (24,30) hoher Rückflußdämpfung abgezweigtes, gesondertes Wellenleiternetzwerk (26,32) mit einem Überlagerungs-Richtkoppler (28) vorgesehen ist.

3. Brillouin-Ringlaserkreisel nach Anspruch 2, **dadurch gekennzeichnet, daß** das Wellenleiternetzwerk zur Überlagerung der Laser-Lichtbündel in genau einer Zuleitung (26) des Überlagerungs-Richtkopplers (28) einen Phasenmodulator (40) aufweist, durch welchen eine Phasenmodulation mit unterdrücktem Träger und hoher Rückflußdämpfung in Richtung des Faser-Ringresonators (18) erfolgt.

4. Brillouin-Ringlaserkreisel nach Anspruch 2 oder 3, **dadurch gekennzeichnet, daß** als Mittel zur Dämpfung resonatorexterner Rückkopplungsanteile in den beiden Zuleitungen (26,32) zu dem Überlagerungs-Richtkoppler (28) optische Isolatoren (46,48) mit Durchlaßrichtung in Richtung zu dem Überlagerungs-Richtkoppler (28) hin eingeschaltet sind.

5. Brillouin-Ringlaserkreisel nach Anspruch 4, **gekennzeichnet durch** Mittel zur Minimierung der Anteile des Lichts der Brillouin-Ringlaser, das aus den Pumplaser-Zuleitungen (20,22) wieder in die Brillouin-Ringlaser zurückgekoppelt wird.

6. Brillouin-Ringlaserkreisel nach Anspruch 5, **dadurch gekennzeichnet, daß** als Mittel zur Minimierung der Rückkoppel-Anteile aus den Pumplaser-Zuleitungen (20,22) der Koppelfaktor der Koppelmittel (16) zwischen Pumplaser-Zuleitung (20,22) und Faser-Ringresonator (18) so gering gewählt ist, daß bei vorgegebener Pumpleistung in den Pumplaser-Zuleitungen (20,22) gerade die für einen stabilen Ringlaser-Betrieb erforderliche Pumpleistung in den Faser-Ringresonator (18) eingespeist wird.

7. Brillouin-Ringlaserkreisel nach Anspruch 5, **dadurch gekennzeichnet, daß** als Mittel zur Minimierung der Rückkoppelanteile aus den Pumplaser-Zuleitungen (20,22) in den Pumplaser-Zuleitungen (20,22) optische Isolatoren (42,44) angeordnet sind, deren Durchlaßrichtung in Richtung zu dem Faser-Ringresonator (18) hin verläuft und die eine hohe Rückflußdämpfung in Sperrichtung aufweisen.

8. Brillouin-Ringlaserkreisel nach Anspruch 5, **dadurch gekennzeichnet, daß** als Mittel zur Minimierung der Rückkoppelanteile aus den Pumplaser-Zuleitungen (20,22) die Kopplung zwischen Pumplasern (12,14) und Pumplaser-Zuleitungen (20,22) mit Mitteln zur Minimierung der Rückstreuung versehen ist.

9. Brillouin-Ringlaserkreisel nach einem der Ansprüche 1 bis 8, **dadurch gekennzeichnet, daß** die Pumplaser-Zuleitungen (20,22) von einer einzigen Faser (10) gebildet sind, die sich von einem Pumplaser (12) zum anderen (14) erstreckt und die in einem Mittelbereich über einen die Kopplermittel bildenden Koppler (16) mit dem Faser-Ringresonator (18) gekoppelt sind.

## Claims

1. A Brillouin ring laser gyro, comprising
(a) a fibre ring resonator (18), which has a sequence of resonance frequencies, neighbouring resonance frequencies differing by a free spectral range,
(b) means for generating two pump laser waves in said fibre ring resonator (18) in opposite directions, the frequencies of said pump laser waves coinciding with resonance fre-quencies of said fibre ring resonator (18) and differing by an integral multiple of said free spectral range , whereby two Brillouin ring lasers are excited in opposite directions in said fibre ring resonator (18) by stimulated Brillouin scattering,
wherein
(c) means (40;42,44;46,48) for damping feedback components originating outside said fibre ring resonator (18) from re-entering said fibre ring resonator (18).

2. A Brillouin ring laser gyro as claimed in claim 1 wherein
- said means for generating two pump laser waves propagating in said fibre ring reso-nator (18) in opposite directions comprise two pump lasers (12,14), whereby said pump laser waves (12,14) are coupled into said fibre ring resonator (18) by means of pump laser supply means (20,22) and coupler means, and
- a separate wave guide network (26,32) is provided, including a superposition directional coupler (28), said separate wave guide network (26, 32) branched off from the pump laser supply means (20, 22) by coupler means (24,30), which have a high back-flux damping in the directions of the fibre ring resonator (18), for superposing light beams from the Brillouin ring laser waves propagating in said fibre ring resonator (18) in opposite directions.

3. A Brillouin ring laser gyro as claimed in claim 2, wherein said wave guide network for superposing said light beams from the Brillouin ring laser waves comprises a phase modulator (40) in exactly one supply fibre (26) of said superposition directional coupler (28), said phase modulator (40) being modulated to provide phase modulation with suppressed carrier and having a high back-flux damping in the direction of the fibre ring resonator (18).

4. A Brillouin ring laser gyro as claimed in claim 2 and claim 3, wherein said means for damping feedback components from outside said fibre ring resonator (18) comprise optical isolators (46,48), having high transmission in the direction of said superposition directional coupler (28) and being arranged in each of said superposition directional coupler supply fibres (26,32).

5. A Brillouin ring laser gyro as claimed in claim 4, wherein means are provided for minimising proportions of said Brillouin ring laser light, which is fed back from said pump laser supply fibres (20,22) into the Brillouin ring lasers.

6. A Brillouin ring laser gyro as claimed in claim 5, wherein said means for minimising the feedback proportions from the pump laser supply fibres (20,22) comprises the coupling factor of said coupler means (16) between said pump laser supply fibrcs (20,22) and said fibre ring resonator (18) being so low, that, with a given pump power in said pump laser supply fibres (20,22) just that amount of pump power is coupled to said fibre ring resonator (18), which is required for stable ring laser operation.

7. A Brillouin ring laser gyro as claimed in claim 5, wherein said means for minimising the feedback proportions from said pump laser supply fibres (20,22) comprises optical isolators (42, 44) arranged in said pump laser supply fibres (20,22) so that their high transmission directions are towards said fibre ring resonator (18), said optical isolators (42,44) having a high back-flux damping into their low transmission directions.

8. A Brillouin ring laser gyro as claimed in claim 5, wherein said means for minimising the feedback proportions from the pump laser supply fibres (20,22) comprises means for minimising backscattering at the junctions between said pump lasers (12,14) and said pump laser supply fibres (20,22).

9. A Brillouin ring laser gyro as claimed in claims 1 to 8, wherein said pump laser supply fibres (20,22) are formed by ends of one single fibre (10), which extends from one pump laser (12) to the other pump laser (14), in a median portion thereof, being coupled with said fibre ring resonator (18) through a coupler representing said coupler means (16).

## Revendications

1. Gyroscope à laser en anneau à effet Brillouin comprenant:
(a) une cavité résonnante en anneau de fibre (18) ayant une série de fréquences de résonance, des fréquences de résonance avoisinantes diffèrent par un intervalle spectral libre, et
(b) des moyens de produire deux ondes de laser de pompage se propagent dans des directions opposées dans ladite cavité résonnante en anneau de fibre (18), les fréquences desdites ondes de laser de pompage différent par entier multiple dudit intervalle spectral libre de ladite cavité résonnantes en anneau de fibre (18) et coïncident avec des fréquences de ladite cavité résonnantes en anneau de fibre (18) de façon à exciter deux lasers en anneau par une diffusion de Brillouin stimulée se propageant dans des directions opposées dans ladite cavité résonnante en anneau de fibre (18)
défini par
(c) des moyens (40;42,44;46,48) d'atténuer des composantes de rétroactions externes de ladite cavité résonnantes en anneau de fibre (18), qui est réinjectée dans ladite cavité résonnantes en anneau de fibre (18).

2. Gyroscope à laser en anneau à effet Brillouin tel qu'il est défini dans la revendication 1, dans lequel
- les moyens de produire deux ondes de laser, qui se propagent dans des direction opposées, sont faits par deux lasers de pompage (12, 14) dont les ondes des lasers de pompage sont couplées a la cavité résonnantes en anneau de fibre (18) par des lignes d'alimentation (20,22) et des moyens de couplage (16), et
- un circuit de guide d'ondes séparé (26, 32), qui est dérivé aux lesdites lignes d'alimentation des lasers de pompage (20, 22) à l'aide des distributeurs (24, 30) d'une grande atténuation de réflexions, est prévu pour superposer les faisceaux de lumière des lesdites lasers en anneau à effet Brillouin, qui se propagent dans des directions opposées avec un coupleur de superposition (28).

3. Gyroscope à laser en anneau à effet Brillouin tel qu'il est défini dans la revendication 2 dans lequel ledit circuit de guide d'ondes pour superposer les faisceaux de lumière des lasers comprend un modulateur en phase (40), placé exactement dans une seule ligne d'alimentation (26) du coupleur de superposition (28), ledit modulateur produit une modulation avec très bon suppression de l'onde porteuse et a une grande atténuation de réflexions vers la direction de la cavité résonnantes en anneau de fibre (18).

4. Gyroscope à laser en anneau à effet Brillouin tel qu'il est défini dans la revendication 2 ou 3 dans lequel comme moyens pour atténuer des composantes de rétroactions externes de ladite cavité résonnantes en anneau de fibre (18) des isolateurs optiques (46, 48) sont placé dans les deux lignes d'alimentation (26, 32) du coupleur de superposition (28), lesdits isolateurs ont une grande transmission vers la direction de coupleur de superposition (28) et lesdits isolateurs ont une très petite transmission vers la direction de ladite cavité résonnantes en anneau de fibre (18).

5. Gyroscope à laser en anneau à effet Brillouin tel qu'il est défini dans la revendication 4 dans lequel les moyens de minimiser les composantes de la lumière des lasers en anneau à effet Brillouin, qui est reinjectèe à des lignes d'alimentation des lasers de pompage (20, 22) dans les lasers en anneau à effet Brillouin.

6. Gyroscope à laser en anneau à effet Brillouin tel qu'il est défini dans la revendication 5, dans lequel comme moyen pour minimiser les composantes de rétroactions à des lesdites lignes d'alimentation des lasers de pompage (20, 22) le valeur de couplage de moyen de couplage (16) entre à lesdits lignes d'alimentation des lasers de pompage (20, 22) et ladite cavité résonnantes en anneau de fibre (18) est choisi tellement petit que par une puissance de pompage donnée dans ladite ligne d'alimentation des lasers de pompage (20, 22), exactement cette puissance est couplée dans ladite cavité résonnantes en anneau de fibre (18),qui est nécessaire pour obtenir une opération stable des lasers en anneau à effet Brillouin.

7. Gyroscope à laser en anneau à effet Brillouin tel qu'il est défini dans la revendication 5, dans lequel comme moyen pour minimiser les composantes de rétroactions desdites lignes d'alimentation des lasers de pompage (20, 22) des isolateurs optiques sont placés dans lesdites lignes d'alimentation des lasers de pompage (20, 22), lesdits isolateurs ont une grande transmission vers la direction de ladite cavité résonnantes en anneau de fibre (18) et une grande atténuation des réflexions vers 1 direction de la petite transmission.

8. Gyroscope à laser en anneau à effet Brillouin tel qu'il est défini dans la revendication 5, dans lequel comme moyen pour minimiser les composantes de rétroactions desdites lignes d'alimentation des lasers de pompage (20, 22) les couplages entre lesdits lasers de pompage (12, 14) et lesdites lignes d'alimentation des lasers de pompage (20, 22) sont pourvus par des moyens de minimiser la retro-diffusion.

9. Gyroscope à laser en anneau à effet Brillouin tel qu'il est défini dans l'une quelconque des revendication 1 à 8, dans lequel lesdites lignes d'alimentation des lasers de pompage (20, 22) sont formées par un seul fibre (10), qui s'étend d'un laser de pompage (12) à l'autre (14), ledit fibre (10) a un intervalle moyen, dans lequel il est couplée a ladite cavité résonnantes en anneau de fibre (18) a l'aide d'un coupleur (16), qui forme le moyen de couplage.
